# EUROPÄISCHE PATENTANMELDUNG

(11) **EP 1 069 701 A2**
(43) Veröffentlichungstag der Anmeldung: **17.01.2001**
(21) Anmeldenummer: 00113799.1
(22) Anmeldetag: 29.06.2000
(51) Int. Cl.: H04B 3/44

(54) **Fernspeiseweiche**

(30) Priorität: 08.07.1999 DE 19931910
(71) Anmelder: Kathrein-Werke KG, 83022 Rosenheim (DE)
(72) Erfinder: Alexy, Dieter, 83024 Rosenheim (DE); Anderl, Wolfgang, 83043 Bad Aibling (DE); Wild, Andreas, 83024 Rosenheim (DE)
(74) Vertreter: Flach, Dieter Dipl.-Phys.

(57) **Zusammenfassung**

Eine verbesserte Fernspeiseweiche zeichnet sich durch folgende Maßnahmen aus:
- eine Fernspeiseweiche (5) umfaßt kabelübertragungsstreckenseitig eine Frequenzweiche (21) mit einem oberen und einem unteren HF-Zweig (23, 25),
- der obere und der untere HF-Zweig (23, 25) sind ausgangsseitig über eine Summen- oder Verknüpfungsschaltung (29) zusammengeführt,
- im unteren HF-Zweig (25) ist an einem Verzweigungspunkt (27) eine Signalweiche (28) vorgesehen, worüber im unteren HF-Zweig (25) eine Aufspaltung des Signalstromes in ein unteres HF-Signal, welches in den unteren HF-Signalweg (25') eingespeist wird und den Speisestrom, der in den Fernspeiseweg (7) eingespeist wird, und
- die Grenzfrequenz für die Aufspaltung in den oberen und unteren HF-Zweig ist so gewählt, dass die durch eine dem Verzweigungspunkt (27) vorgeschaltete Spule (L2) bedingte Eigenresonanzfrequenz oberhalb des zu übertragenden HF-Gesamtfrequenzbandbereiches liegt.

## Beschreibung

Die Erfindung betrifft eine Fernspeiseweiche nach dem Oberbegriff des Anspruchs 1.

Fernspeiseweichen werden üblicherweise in Kommunikations-Kabelnetzen eingesetzt. Derartige Fernspeiseweichen dienen zur Aufspaltung des Signal- und des Speiseweges. Auf dem Signalweg werden beispielsweise die Audio- und Videosignale weitergegeben, wohingegen in dem Speiseweg eine Versorgungsspannung aus der gemeinsamen Kabelleitung abgezweigt wird, um hierüber beispielsweise ein nachgeschaltetes Netzteil zu betreiben, worüber ein Streckenverstärker angesteuert werden kann.

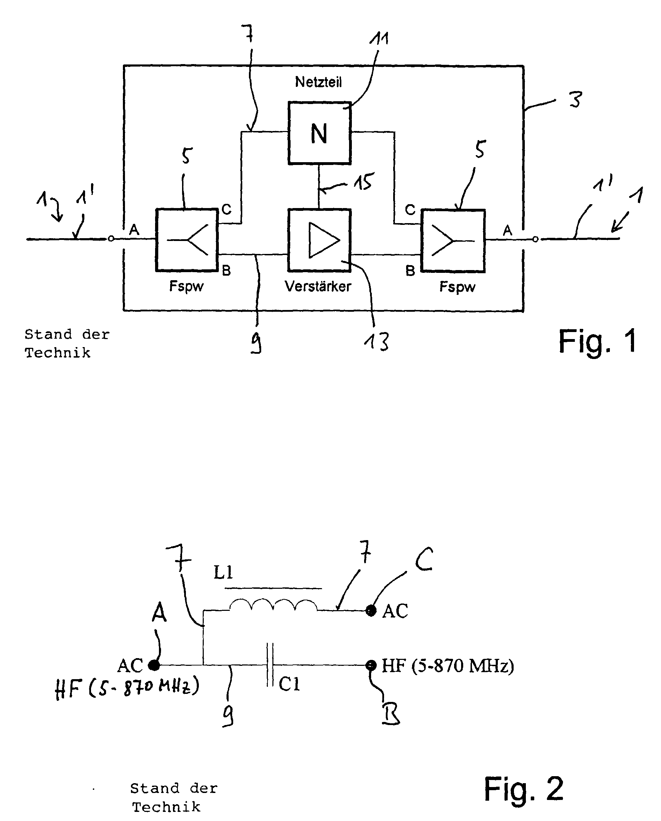

Der grundsätzliche Aufbau und die Verwendung einer derartigen Fernspeiseweiche nach dem Stand der Technik wird anhand von Figur 1 erläutert.

Auf einer Kabelübertragungsstrecke 1, insbesondere einer Breitbandkommunikations-Kabelübertragungsstrecke 1, sind beispielsweise längs eines Übertragungskabels 1' in den entsprechenden Abständen sogenannte Breitband-Kommunikations-Verstärkerpunkte 3 geschaltet, die nachfolgend auch kurz als BK-Verstärkerpunkte 3 bezeichnet werden. Diese umfassen eingangsseitig jeweils eine erste Fernspeiseweiche 5 und ausgangsseitig eine dazu symmetrisch geschaltete zweite Fernspeiseweiche 5, die grundsätzlich gleich aufgebaut sind.

Jede der beiden in Figur 1 gezeigten Fernspeiseweichen 5 weist also einen ersten Anschluß A auf, der mit dem Übertragungskabel 1' der Kabelübertragungsstrecke 1 verbunden ist. Zwischen den auf der Verzweigungsseite vorgesehenen Anschlüssen C ist ein Fernspeiseweg 7 und zwischen den Anschlüssen B ein Signalweg 9 gebildet, wobei im Fernspeiseweg 7 ein Netzteil 11 und in dem Signalweg 9 ein Verstärker 13 angeschlossen sind.

Da über die Kabelübertragungsstrecke 1 nicht nur die Daten, also die Datensignale übertragen werden, sondern zudem auch die Stromversorgung für einen Verstärker 13 erfolgen muss, wird an der jeweils eingangsseitigen Fernspeiseweiche 5 die Aufspaltung der Audio-Videosignale und des Fernspeisestroms vorgenommen, wobei die Stromversorgung des Verstärkers 13 über das Netzteil 11 und die vom Netzteil 11 zum Verstärker 13 führende Versorgungsleitung 15 erfolgt. Ausgangsseitig werden dann über die nachfolgende zweite Fernspeiseweiche 5 der Signalweg 9 und der Fernspeiseweg 7 wieder zusammengeschaltet.

In Figur 2 ist eine übliche Fernspeiseweiche 5 dargestellt, an deren Eingang A das Hochfrequenzsignal und die Wechselspannung des Speisestroms für einen Verstärker anstehen, wobei im Signalweg 9 ein Kondensator C1 und im Speiseweg 7 eine Drossel L1 geschaltet sind, so dass am Ausgang C ein Wechselstrom AC und am Ausgang B das Hochfrequenzsignal HF entsprechend dem zu übertragenden Frequenzspektrum anliegt.

Fernspeiseweichen in dieser Ausführung haben erhebliche Nachteile. Durch Verluste und Eigenresonanzen der Fernspeisedrossel L1 erhöht sich die Durchgangsdämpfung im HF-Zweig ab ca. 100 MHz sehr stark. Zudem entsteht bei AC-Speisung durch die Magnetisierung der Fernspeisedrossel im gesamten HF-Bereich (5 - 870 MHz) eine Brumm-Modulation, die sich mit steigender Frequenz stark erhöht.

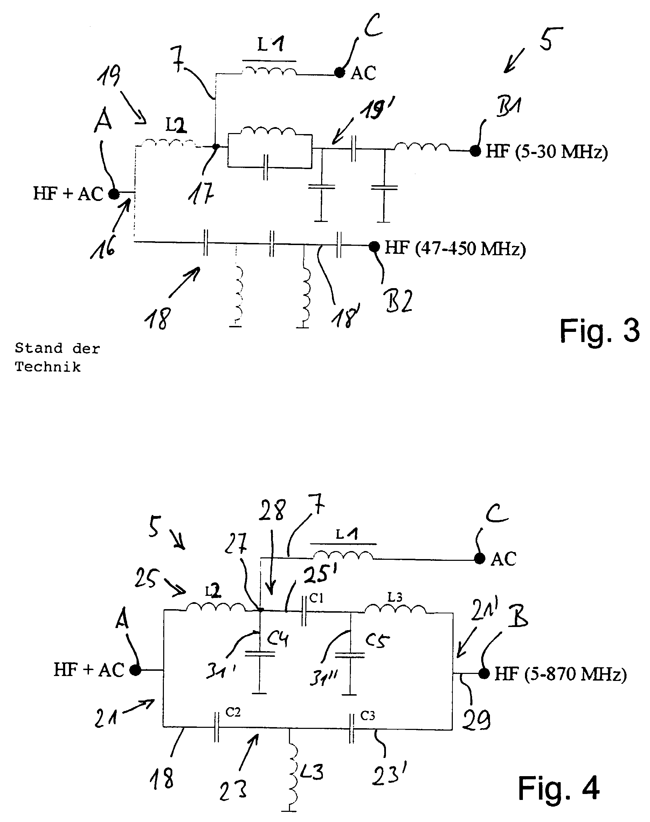

Gemäß Figur 3 ist gezeigt, dass heute zudem ein Vorwärtsübertragungs- und ein Rückübertragungsweg 18', 19' gewünscht wird, wozu unter Verwendung einer Frequenzweiche 16 die Kabelübertragungsstrecke 1 in einen Hochpaß 18 und einen Tiefpaß 19 aufgespalten wird (und dabei der Tiefpaß als Rückübertragungsweg 19' verwendet wird), wobei von einem Verzweigungspunkt 17 nach der Luftspule L2 im Tiefpaßzweig 19 die Stromversorgungsabzweigung 7 vorgenommen wird.

Eine Schaltung gemäß Figur 3 hat den Vorteil, dass die Durchgangsdämpfung im Bereich beispielsweise von 47 bis 450 MHz (Vorwärtsübertragungsweg) nicht belastet wird, da die mit Verlusten behaftete Fernspeisedrossel L1 über die Luftspule L2 von diesem Bereich entkoppelt ist. Die Belastung für den Bereich von 5 bis 30 MHz ist durch die Drossel L1 noch vergleichsweise gering. Allerdings erweist sich als nachteilig, dass eine Aufsplitterung des Frequenzbereiches von 5 bis 30 MHz zum einen und in dem davon getrennten zweiten Frequenzbereich von 47 bis beispielsweise maximal 450 MHz möglich ist, also kein breitbandigerer HF-Übertragungsbereich über 450 MHz hinaus (beispielsweise bis 870 MHz) realisiert werden kann. Denn durch die Höhe des Fernspeisestromes muss für die Spule L2 ein relativ dicker Kupferdraht verwendet werden, was zu einer höheren Eigenkapazität führt. Zusammen mit der Induktivität der Spule L2 entsteht ein Resonanzkreis, der im HF-Zweig 18 bei ca. 600 MHz einen Einbruch (Saugkreisbildung) der Durchgangsdämpfung verursacht. Bei systembedingten hohen Strömen ergibt sich deshalb nur ein begrenzter HF-Übertragungsbereich bis max. 450 MHz.

Eine Fernspeiseweiche für ein Leitungsendgerät eines analogen oder digitalen Nachrichtenübertragungssystems ist grundsätzlich aus der DE 32 35 111 A1 bekannt geworden. Da am Anschluss des Leitungsendgerätes Störspannungen in das Kabel gelangen können, die zu einem Störpotential zwischen dem gleichstrommäßig auf Schwebepotential befindlichen Außenleitern der Koaxialleitungen und dem Kabelaußenleiter führen, wird zur wirksamen Dämpfung der Störspannung einer Eingangsanordnung für das angeschlossene Leitungsendgerät vorgeschlagen, die einen Leitungsüberträger zur Auftrennung des Hoch- und Tiefpassweges und einen Tiefpassfilter für den Tiefpassweg umfasst. Die anhand der Figuren 1 bis 3 erläuterten Nachteile treten jedoch auch bei dieser vorbekannten Fernspeiseweiche auf.

Schließlich ist eine Fernspeiseweiche grundsätzlich auch aus der DE 35 10 270 A1 bekannt, die einen HF-Eingang und einen HF-Ausgang umfasst. Diese Vorveröffentlichung befasst sich jedoch mit einem anderen Problem, nämlich der geeigneten Verwendung eines Überspannungsableiters, durch welchen das Hochfrequenzübertragungsverhalten der Fernspeiseweiche nicht nachteilig beeinflusst werden soll.

Aufgabe der vorliegenden Erfindung ist es von daher eine Fernspeiseweiche zu schaffen, die gegenüber dem Stand der Technik eine breitbandigere Übertragung ermöglicht und dies sogar bei höheren Fernspeiseströmen, ohne dass dies zu einer Verschlechterung bezüglich eines Brummverhaltens führt.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Während die nach dem Stand der Technik bekannten Schaltungen schnell an die oben erläuterten Grenzen stoßen, weil gemäß dem Stand der Technik eine breitbandige Übertragung nur unter Verringerung der Eigenkapazität der Spule L2 durch Verringerung des Drahtdurchmessers möglich ist, ein verringerter Drahtdurchmesser aber wiederum zu niedrigen Speiseströmen führen würde, können diese an sich gegenläufigen Effekte durch die vorliegende Erfindung problemlos überwunden werden.

Erfindungsgemäß ist dazu vorgesehen, dass das über die Kabelübertragungsstrecke übertragene multiplexe Signal mittels einer Frequenzweiche in zwei Zweige aufgeteilt wird und zwar mit einer vergleichsweise hohem Frequenzwechsel von beispielsweise 100 MHz. In dem Übertragungszweig mit dem niederen Frequenzband wird nach einer Spule der Signalweg nochmals getrennt in einen Fernspeisezweig und in einen unteren HF-Signalzweig, wobei der Speisezweig über eine Fernspeisedrossel und der niedrigere HF-Zweig über einen Kondensator führt.

Dadurch ergibt sich der entscheidende Vorteil, dass durch die entsprechende Wahl eines geeigneten Frequenzwechsels (beispielsweise 100 MHz) für die aus einem Hochpaß (HP) und einem Tiefpaß (TP) gebildete Weiche eine Spule mit einer relativ niedrigen Induktivität verwendet werden kann. Dies hat zur Folge, dass die Eigenresonanzfrequenz bei Verwendung eines sehr dicken Drahtes für die im Tiefpaß liegende Spule (zur Ermöglichung hoher Fernspeiseströme) bei über 1000 MHz liegt, also außerhalb des höchsten Eckwertes für die breitbandige Übertragung liegt, und damit ohne nachteiligen Einfluß auf das System bleibt. Durch die Verwendung dickerer Drähte für die im Tiefpaß geschaltete Spule lassen sich nicht nur höhere Speiseströme übertragen, sondern zudem die Temperatur vergleichsweise niedrig halten, wodurch ebenfalls sichergestellt wird, dass die Gesamttemperaturentwicklung nicht die vorgegebenen Grenzwerte übersteigt, wodurch letztlich auch die Gesamtliebensdauer der diversen Bauteile in einem BK-Verstärkerpunkt positiv beeinflußt wird. Da zudem die Fernspeisedrossel über die vorzugsweise als Luftspule gebildete Spule von dem Frequenzbereich über 100 MHz, also von dem Hochpaß entkoppelt ist, kann diese auch nicht mehr die Brumm-Modulation und die Durchgangsdämpfung beeinflussen. Die Beeinflussung durch die Fernspeisedrossel ist im Bereich von 5 bis 100 MHz noch vergleichsweise gering.

Der Hoch- und der Tiefpaß werden dann wieder zu einem gemeinsamen Ausgang zusammengelegt, wodurch sich die breitbandige Übertragung ohne nennenswerte Verluste realisieren läßt.

Bei Fernspeiseweichen der heutigen Generation mit einem separaten Vor- und einem Rückübertragungsweg kann eine erfindungsgemäße Fernspeiseweiche im Sinne einer ersten Eingangsstufe verwendet werden, der eine zweite Stufe in Form einer Ausgangsstufe nachgeschaltet ist, in der der gemeinsame breitbandige Weg über eine Frequenzweiche in einen ersten Vorwärtsübertragungs- und einen zweiten Rückübertragungsweg entsprechend zwei versetzt zueinander liegender Frequenzbandbereiche getrennt wird.

Die Erfindung wird nachfolgend anhand weiterer Zeichnungen näher erläutert. Dabei zeigen im einzelnen:
- Figur 1 :: eine schematische Darstellung eines BK-Verstärkerpunktes nach dem Stand der Technik;
- Figur 2 :: eine erste schematische Darstellung einer Fernspeiseweiche, wie sie bei einem BK-Verstärkerpunkt eingangs- und ausgangsseitig verwendet wird;
- Figur 3 :: eine Fernspeiseweiche nach dem Stand der Technik mit einem Vorwärts- und einem Rückwärtsweg;
- Figur 4 :: eine schematische Darstellung einer erfindungsgemäßen Fernspeiseweiche;
- Figur 5 :: eine schematische Darstellung einer abgewandelten Fernspeiseweiche, bei der die in Figur 4 wiedergegebene Fernspeiseweiche als Eingangsstufe dient, der eine Ausgangsstufe zur Erzeugung eines Vorwärts- und Rückwärtsübertragungsweges nachgeschaltet ist; und
- Figur 6 :: ein Diagramm zur Verdeutlichung des breitbandigen Signals.

Bei dem erfindungsgemäßen Ausführungsbeispiel gemäß Figur 4 werden die am Eingang A der Fernspeiseweiche 5 anstehenden multiplexen Signale, nämlich ein HF- und ein Wechselstrom-AC-Signal, mittels einer Frequenzweiche 21 unter Verwendung eines Kondensators C2 im oberen HF-Zweig 23 mit dem oberen HF-Signalweg 23' und unter Verwendung einer Spule (Luftspule) L2 im unteren HF-Zweig 25 entsprechend aufgeteilt, wobei die Grenzfrequenz für den so gebildeten Hoch- und Tiefpaß bei ca. 100 MHz liegt.

Im unteren HF-Zweig 25 mit dem unteren HF-Signalweg 25' wird nach der Spule L2 das Signal nochmals aufgetrennt in ein Wechselstromsignal AC, welches über den Speiseweg mit einer Fernspeisedrossel L1 zur Fernspeisung eines Verstärkers übertragen wird, und in das weitere HF-Signal, welches nach dem Verzweigungspunkt 27 der Frequenzweiche 21 über einen nachfolgenden Kondensator C1 weiter übertragen wird. Über eine dem Kondensator C1 nachgeschaltete Spule L3 werden der untere HF-Frequenzbandbereich von beispielsweise 5 bis 100 MHz und über einen in dem oberen HF-Zweig 23 dem ersten Kondensator C2 nachgeschalteten weiteren Kondensator C3 der hierüber übertragene obere Frequenzbandbereich von beispielsweise 100 bis 870 MHz am gemeinsamen Anschluß 29 zusammengeführt, wobei die Grenzfrequenz für diesen Hoch- und Tiefpaß ebenfalls bei ca. 100 MHz liegt. Schließlich ist in einer vor und nach dem Kondensator C1 geschalteten Zweigleitung 31' bzw. 31'' noch jeweils ein weiterer auf Masse führender Kondensator C4 und C5 vorgesehen. In dem oberen HF-Zweig 23 ist zwischen den beiden Kondensatoren C2 und C3 noch eine weitere mit ihrem anderen Anschlußende auf Masse liegende Induktivität L3 geschaltet.

Bei einem bei ca. 100 MHz liegenden Frequenzwechsel zwischen dem Hochpaß und dem Tiefpaß kann die Spule L2 eine relativ niedrige Induktivität aufweisen, mit der Folge, dass die Eigenresonanzfrequenz bei Verwendung eines sehr dicken Drahtes (zur Erzielung hoher Fernspeiseströme) bei über 1000 MHz liegt. Zudem wird durch die Verwendung dicker Drähte die Erwärmung der Spule in Grenzen gehalten.

Da die Fernspeisedrossel L1 über die Luftspule L2 vom Frequenzbereich über 100 MHz, also vom Hochpaß entkoppelt ist, kann diese auch nicht mehr die Brumm-Modulation und die Duchgangsdämpfung nachteilig beeinflussen. Die Beeinflussung durch die Fernspeisedrossel L1 ist im Bereich von 5 bis 100 MHz noch gering.

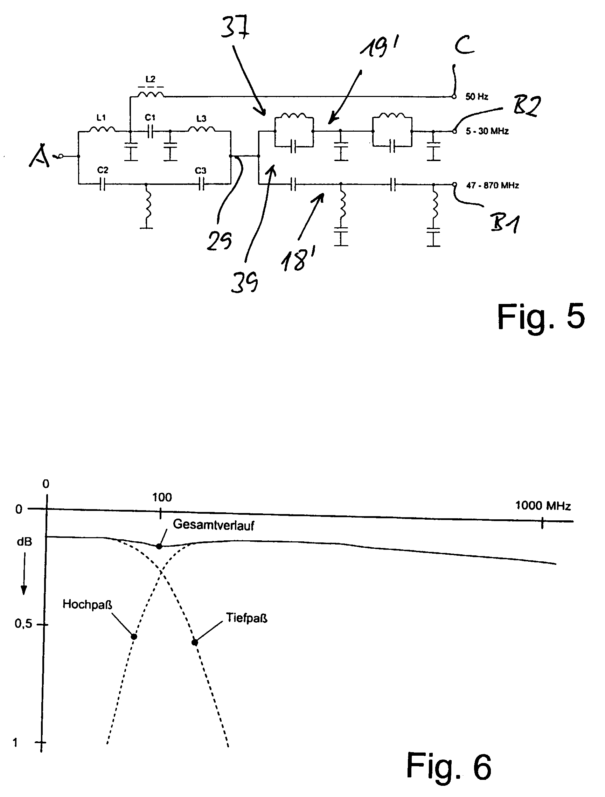

Anhand von Figur 6 ist die Aufspaltung des gesamten HF-Frequenzbandes über die Frequenzweiche 21 in einen Hochpaß 23 und einen Tiefpaß 25 gezeigt (strichliert), sowie das am Ausgangsanschluß 29 (Frequenzweiche 21') wieder zusammengeführte Gesamtfrequenzband, woraus ersichtlich ist, dass der Gesamt-Frequenzverlauf am Anschlußausgang 29 ohne erkennbare oder relevante Dämpfung ansteht.

Anhand von Figur 5 ist nunmehr ein Aufbau erläutert, bei welchem eine erfindungsgemäße Fernspeiseweiche entsprechend der Darstellung gemäß Figur 4 auch bei Verwendung eines Vorwärts- und Rückübertragungsweges 18', 19' einsetzbar ist.

Dazu ist der anhand von Figur 4 geschalteten Fernspeiseweiche 21 am zusammenfassenden Anschluß 29 (an dem bei der erfindungsgemäßen Frequenzweiche ohne Aufspaltung in einen Vorwärts- und Rückwärtsübertragungsweg an sich der Ausgang B liegen würde) eine Verzweigungsschaltung 37 nachgeschaltet, und zwar mit einer Frequenzweiche 39 für einen Vorwärtsübertragungsweg 18' für ein oberes HF-Frequenzband von beispielsweise 47 bis 870 MHz und ein Rückübertragungsweg 19' beispielsweise zur Übertragung eines Signales in einem unteren HF-Zweig in einem Bandbereich von beispielsweise 5 bis 30 MHz. Der Ausgang des oberen HF-Zweiges für die Vorwärtsübertragung ist dabei mit B1 und der Anschluß für den Rückübertragungsweg mit B2 bezeichnet.

Der Vorwärtsübertragungsweg 18' ist dabei als Hochpaß 18 und der Rückübertragungsweg 19' als Tiefpaß 19 aufgebaut, wobei die Frequenzbandbereiche jeweils an ihren Grenzbereichen so gedämpft sind, dass sich ein entsprechender Frequenzbandabstand zwischen den beiden Zweigen ergibt.

## Patentansprüche

1. Fernspeiseweiche mit folgenden Merkmalen
- die Fernspeiseweiche weist einen ersten Anschluss (A) auf, an welchem die Fernspeiseweiche mit einem längs einer Kabelübertragungsstrecke (1) verlegten Übertragungskabel (1') verbindbar ist,
- die Fernspeiseweiche weist verzweigungsseitig einen zweiten Anschluss (B) auf, an welchem ein Signalweg (9, 18, 19') mit einem Verstärker (13) zuschaltbar ist,
- die Fernspeiseweiche weist verzweigungsseitig einen dritten Anschluss (C) auf, an welchem ein Fernspeiseweg (7) mit einem Netzteil (11) zuschaltbar ist,
- dem ersten Anschluss (A) nachgeordnet ist eine Fernspeiseweiche (5) zur Aufspaltung in einen höher frequenten und einen nieder-frequenten HF-Zweig (23, 25), und
- im nieder-frequenten HF-Zweig (25) ist in einem Verzweigungspunkt (27) eine Signalweiche (28) vorgesehen,
- mittels der Signalweiche (28) erfolgt in dem niederfrequenten HF-Zweig (25) eine Aufspaltung des Signalstromes in das in den nieder-frequenten HF-Signalweg (25') eingespeiste nieder-frequente HF-Signal und den in den Fernspeiseweg (7) eingespeisten Speisestrom,
**gekennzeichnet durch** die folgenden weiteren Merkmale
- die Grenzfrequenz für die Aufspaltung in den höher- und nieder-frequenten HF-Zweig ist so gewählt, dass die durch eine dem Verzweigungspunkt (27) vorgeschaltete Spule (L2) bedingte Eigenresonanzfrequenz oberhalb des zu übertragenden HF-Gesamtfrequenzbandbereiches liegt, und
- der höher- und der nieder-frequente HF-Zweig (23, 25) sind ausgangsseitig über eine Summen- oder Verknüpfungsschaltung (29) zusammengeführt.

2. Fernspeiseweiche nach Anspruch 1, **dadurch gekennzeichnet,** dass der gesamte zu übertragende HF-Frequenzbandbereich vorzugsweise zumindest bis zu 870 MHz beträgt, und dass die Eigenresonanzfrequenz zumindest mehr als 50 MHz, vorzugsweise mehr als 100 MHz höher liegt, insbesondere über 1000 MHz.

3. Fernspeiseweiche nach Anspruch 1 oder 2, **dadurch gekennzeichnet,** dass die dem Verzweigungspunkt (27) vorgeschaltete Spule (L2) eine niedrigere Induktivität, vorzugsweise eine Induktivität kleiner als 200 nH aufweist.

4. Fernspeiseweiche nach einem der Ansprüche 1 bis 3, **dadurch gekennzeichnet,** dass der im höher-frequenten HF-Zweig (23) gebildete Hochpaß (18) und der im nieder-frequenten HF-Zweig (25) gebildete Tiefpaß (19) so gewählt sind, dass am gemeinsamen Ausgang (29) an der Summenschaltung ein zu übertragendes Gesamtfrequenzband ohne wesentliche Dämpfungen im Grenzfrequenzbereich erzielbar ist.

5. Fernspeiseweiche nach einem der Ansprüche 1 bis 4, **dadurch gekennzeichnet,** dass der Fernspeiseweiche, insbesondere dem das gesamte HF-Frequenzband übertragenden Anschluß (29) eine Verzweigungsschaltung (37) mit einer Frequenzweiche (39) zur Erzeugung eines vorwärtsübertragungs- und Rückübertragungsweges (41, 43) nachgeschaltet ist.

6. Fernspeiseweiche nach Anspruch 5, **dadurch gekennzeichnet,** dass der Hochpaß (18) in dem Vorwärtsübertragungsweg (18') von dem im Rückübertragungsweg (19') gebildeten Tiefpaß (19) so gewählt ist, dass das über den Vorwärtsübertragungsweg (18') übertragene Frequenzband von dem im Rückübertragungsweg (19') übertragenen Frequenzbandbereich versetzt zueinander liegen.
